(19) Europäisches Patentamt / European Patent Office / Office européen des brevets

(11) **EP 2 137 488 B1**

(12) **EUROPÄISCHE PATENTSCHRIFT**

(45) Veröffentlichungstag und Bekanntmachung des Hinweises auf die Patenterteilung:
**08.08.2012 Patentblatt 2012/32**

(21) Anmeldenummer: **08736106.9**

(22) Anmeldetag: **11.04.2008**

(51) Int Cl.:
*G01B 11/24* (2006.01)     *G02B 21/00* (2006.01)
*G02B 21/16* (2006.01)     *G06T 7/00* (2006.01)
*G01N 21/64* (2006.01)

(86) Internationale Anmeldenummer:
**PCT/EP2008/054390**

(87) Internationale Veröffentlichungsnummer:
**WO 2008/125605 (23.10.2008 Gazette 2008/43)**

(54) **VERFAHREN UND ANORDNUNG ZUR OPTISCHEN ABBILDUNG MIT TIEFENDISKRIMINIERUNG**

METHOD AND ASSEMBLY FOR OPTICAL REPRODUCTION WITH DEPTH DISCRIMINATION

PROCÉDÉ ET DISPOSITIF DE REPRODUCTION OPTIQUE À DISCRIMINATION EN PROFONDEUR

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.04.2007 DE 102007018048**

(43) Veröffentlichungstag der Anmeldung:
**30.12.2009 Patentblatt 2009/53**

(73) Patentinhaber: **Schwertner, Michael 07743 Jena (DE)**

(72) Erfinder: **Schwertner, Michael 07743 Jena (DE)**

(74) Vertreter: **Kruspig, Volkmar
Meissner, Bolte & Partner GbR
Widenmayerstrasse 48
80538 München (DE)**

(56) Entgegenhaltungen:
EP-A- 1 333 306          WO-A-03/060587
DE-A1- 10 118 463        JP-A- 2001 117 010
JP-A- 2001 330 555       US-A- 5 381 236
US-B1- 7 115 848

- KRZEWINA L G ET AL: "SINGLE-EXPOSURE OPTICAL SECTIONING BY COLOR STRUCTURED ILLUMINATION MICROSCOPY" OPTICS LETTERS, OSA, OPTICAL SOCIETY OF AMERICA, WASHINGTON, DC, US, Bd. 31, Nr. 4, 15. Februar 2006 (2006-02-15), Seiten 477-479, XP001239067 ISSN: 0146-9592
- KLAUS KÖRNER ET AL.: "One-grating projection for absolute three-dimensional profiling" OPTICAL ENGINEERING, Bd. 40, Nr. 8, August 2001 (2001-08), Seiten 1653-1660, XP002505180
- SIERACKI C K ET AL: "SIMPLE BINARY OPTICAL ELEMENTS FOR ABERRATION CORRECTION IN CONFOCAL MICROSCOPY" OPTICS LETTERS, OSA, OPTICAL SOCIETY OF AMERICA, WASHINGTON, DC, US, Bd. 20, Nr. 10, 15. Mai 1995 (1995-05-15), Seiten 1213-1215, XP000512206 ISSN: 0146-9592

EP 2 137 488 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur Erzeugung optischer Schnittbilder.

Die vorliegende Erfindung dient der dreidimensionalen, schichtweisen optischen Abtastung räumlich ausgedehnter Objekte und hat hauptsächlich Anwendungen in der Mikroskopie, ist jedoch nicht auf diesen Bereich beschränkt. Um dreidimensionale Abbildungen von Objekten zu erhalten, bedient man sich oft der Technik des optischen Schneidens. Ein sogenannter optischer Schnitt ist eine Abbildung, welche nur Informationen aus einem bestimmten Tiefenbereich enthält. Ein optisches System zur Erstellung optischer Schnitte bildet deshalb selektiv Objektdetails ab, welche sich in der Fokusebene befinden, wobei Objektdetails, welche sich nicht in dieser Ebene befinden, im Schnittbild unterdrückt werden.

Durch die Aufnahme einer Serie von optischen Schnitten an unterschiedlichen Fokuspositionen kann ein 3D Objekt schrittweise abgetastet werden. Somit kann eine dreidimensionale Abbildung des Objektes erstellt oder seine Topologie analysiert werden. Die Begriffe Objekt und Probe werden im Folgenden gleichberechtigt verwendet. Insbesondere in der Mikroskopie wird das untersuchte Objekt oft als Probe bezeichnet.

Die vorliegende Erfindung ermöglicht die Erstellung von optischen Schnitten auf besonders einfache Weise und kann zum Beispiel in der Biologie, Medizin oder den Materialwissenschaften zur Analyse von Objekten verwendet werden.

Eines der ersten Verfahren zur Erzeugung von optischen Schnitten war das konfokale Mikroskop von Minsky [1]. Hier wird die Abbildung von Bilddetails außerhalb der Fokusebene durch eine Anordnung von konfokalen Blenden unterdrückt.

Ein anderer Ansatz zur Erzeugung von optischen Schnitten ist die strukturierte Beleuchtung, wie sie zum Beispiel von Wilson et al. in [2] beschrieben ist. Hier wird eine Struktur, zum Beispiel ein Gitter, in die abzubildende Probe projiziert. Dies erzeugt eine Modulation der Lichtverteilung in der Probe. Wie zum Beispiel in [2] gezeigt wurde, ist die Modulationstiefe in der Fokusebene am stärksten und kennzeichnet in diesem Sinne die Fokusebene. Bei der strukturierten Beleuchtung wird zuerst eine Modulation dem Beleuchtungslicht aufgeprägt, danach eine Serie von Abbildungen für verschiedene Positionen (Phasenschritte) der projizierten Struktur aufgenommen und im letzten Schritt das optische Schnittbild aus den aufgenommenen Daten berechnet.
Hierzu wurden verschiedene Anordnungen vorgeschlagen. Im Patent von Wilson et al., [3] wird ein Gitter in einer der Probe konjugierten Ebene angeordnet und lateral zur optischen Achse verschoben. Bei Gerstner et al. [4][5] wird dagegen eine in den Strahlengang eingebrachte planparallele Platte gekippt, welche die in bzw. auf die Probe projizierte Beleuchtungsstruktur lateral verschiebt. Bei transparenten oder teiltransparenten Proben findet eine Projektion in die Probe statt, bei intransparenten Oberflächenstrukturen wird von einer Projektion auf die Probe gesprochen.
Eine andere Lösung wurde von Neil et al. [6] vorgeschlagen. Hier entsteht die Beleuchtungsstruktur in der Probe direkt durch Interferenz.

Alle Verfahren [2-6] haben die Eigenschaft, dass sie die Aufnahme von mindestens 3 Einzelbildern erfordern. All diese Verfahren und Anordnungen haben gemeinsam, dass Artefakte durch Ungenauigkeiten bei der Positionierung der projizierten Struktur entstehen können, da sie die exakte und gleichzeitig schnelle Einstellung eines mechanischen Elementes erfordert. Details zu Artefakten und deren Kompensation kann man zum Beispiel in [7] finden. Die einzelnen Vorschläge zur Realisierung des Verfahrens unterscheiden sich vor allem hinsichtlich der Anordnung, mit der die Positionsänderung (Phasenlage) der Beleuchtungsstruktur erreicht wird. Insbesondere werden auch Anordnungen vorgeschlagen, welche durch Verzicht auf bewegliche Elemente eine feste Justierung und somit sehr gute Reproduzierbarkeit der Phasenschritte ermöglichen.

In der US 7,115,848 B1 wird eine Beleuchtungseinheit sowie eine optische Vorrichtung zur Abbildung einer Probe, ein ortsauflösender Detektor und Fokussiereinrichtung sowie eine Signalverarbeitungsanlage offenbart. Gemäß der dortigen Lehre sind mindestens drei Schritte zur Berechnung eines Schnittbildes durchzuführen, wobei des Weiteren die Kalibrierung eines Phasenschiebers bzw. Aktuators beschrieben wird. Dies ist mit einem hohen zeitlichen Aufwand verbunden.

Auch in "Single-Exposure optical sectioning by color structured illumination microscopy" von Krzewina L.G. et al in Optics Letters, OSA, Optical Society of America Bd. 31, Nr. 4, 15. Februar 2006, Seiten 477-479 (ISSN:0146-9592) wird eine Lösung der Aufgabe der Erzeugung von optischen Schnitten offenbart, welche mindestens drei Schritte für die Erzeugung eines Schnittes benötigen. Bei der dortigen Nutzung von drei Phasenschritten müssen die optischen Filter in Form von Bandpassfiltern ausgeführt sein, welche nur einen bestimmten Wellenlängenbereich transmittieren, für die anderen Wellenlängen intransparent sind. Dies wird mit Hilfe eines Bayerfilters realisiert. Artefakte aufgrund der Farbigkeit eines Objektes bzw. einer Probe gehen mit der Verwendung eines derartigen Filters einher.

Das US-Patent 5381236 [11] beschreibt einen optischen Sensor zur Abstandsbestimmung von dreidimensionalen Objekten ("range finding"). Hier wird eine periodische Struktur in das Objekt projiziert, wobei die Beleuchtungsstruktur umgekehrt werden kann, was einer Phasenverschiebung um 180 Grad entspricht. Das hier vorgeschlagene Verfahren basiert ebenfalls auf der Änderung der projizierten Struktur in zwei Schritten, weist jedoch gegenüber [11] folgende Unterschiede auf:

Die einzelnen Elemente der projizierte Beleuchtungsstruktur müssen in [11] exakt auf die Einzelelemente des Detektors (CCD Pixel) ausgerichtet werden.

Dies ist eine starke Einschränkung aus mehreren Gründen: Die optische Anordnung müsste sehr genau den Abbildungsmasstab einhalten, um eine Übereinstimmung des Beleuchtungsmusters mit dem Detektor zu erzielen. Weiterhin müsste die relative Justierung der beiden Strukturen sehr exakt realisiert und sub-pixelgenau sein. Die vermutlich wichtigste Einschränkung besteht darin, dass eine auch nur minimale Verzerrung der optischen Abbildung (zum Beispiel Kissen- oder Tonnenverzerrung) eine sub-pixelgenaue Übereinstimmung der Elemente von Beleuchtungsstruktur und Detektor für das gesamte Gesichtsfeld unmöglich macht. Die Anordnung würde aufwendig korrigierte und justierte Optiken erfordern, welche einer breiten und robusten Anwendung des Verfahrens entgegenstehen. Beim vorgeschlagenen Verfahren kann die Beleuchtungsstruktur im Gegensatz zu [11] hinsichtlich ihrer Art und Feinheit frei gewählt werden, da sie keine exakte Ausrichtung der Beleuchtungsstruktur in Bezug auf den Detektor erfordert. Dies ermöglicht eine Anpassung der Tiefendiskriminierung des optischen Systems, bzw. der Dicke des erzeugten optischen Schnittes (in einem konfokalen Mikroskop würde dies der Einstellung des Durchmessers der konfokalen Blendenöffnung entsprechen). Dies kann mit der vorliegenden Erfindung einfach realisiert werden, wäre in [11] entsprechend dem Stand der Technik jedoch nicht möglich. Somit können wesentliche Nachteile von [11] vermieden werden. Eine Anordnung zur Realisierung ohne bewegte Elemente ist ebenfalls nicht in [11] offenbart und kann Nachteile durch Positionierungenauigkeiten vermeiden.

An dieser Stelle soll zur genauen Definition und Abgrenzung auch auf andere in der Literatur beschriebene Methoden zur Vermessung von Oberflächen mittels strukturierter Beleuchtung hingewiesen werden, welche sich von der vorgeschlagenen Methode durch ihr Prinzip unterscheiden. Es gibt Oberflächenmessverfahren, welche auf Triangulation in Kombination mit strukturierter Beleuchtung basieren. Stellvertretend sei hier auf die Literaturstelle [12] und weitere darin enthaltene Referenzen verwiesen. Bei der Triangulation wird die Deformation einer Beleuchtungsstruktur (z.B. Streifenmuster) bei Projektion auf die Probe ausgewertet, wobei das Objektprofil aus der lokalen Phase der projizierten Struktur ermittelt wird. Primäre Messgröße ist also die lokale Phase. Charakteristisch ist auch, dass die Projektion der Struktur und Detektion durch verschiedene, nicht koaxiale Optiken erfolgen oder das Objekt in Bezug auf die optische Achse gekippt wird. Bei der vorliegenden Methode zur Abbildung mit Tiefendiskriminierung geht es um eine Trennung (Diskriminierung) von Bildsignalen, welche aus der Fokusebene stammen, von solchen Signalen, welche dem Hintergrund zuzuordnen sind. Ein Tiefenprofil der Probe kann durch eine axiale Abtastung der Probe mittels einer Fokussiereinrichtung erfolgen, wobei jedes der Teilbilder dieser axialen Abtastung einen optischen Schnitt darstellt. Ein optischer Schnitt, welcher auch pseudo-konfokale Abbildung genannt werden kann, enthält nur die Bildsignale aus der Fokusebene, wobei Hintergrundsignale durch geeignete Methoden unterdrückt bzw. herausgefiltert wurden. Ein Konfokalmikroskop [1] produziert ebenfalls optische Schnitte, löst diese Aufgabe jedoch durch eine andere optische Anordnung. Die Tiefendiskriminierung in einem Verfahren der strukturierten Beleuchtung basiert auf der Detektion der lokalen Modulationstiefe der in bzw. auf die Probe projizierten Struktur. Im Gegensatz zu Triangulationsverfahren ist die lokale Modulation primäre Messgröße. Weiterhin erfolgt in der vorliegenden Erfindung die Projektion der Beleuchtungsstruktur sowie die Detektion des Lichtes von der Probe vorzugsweise in durch ein und dieselbe, der Probe zugewandte Optik (Objektiv). Triangulation hingegen arbeitet mit der Projektion auf bzw. Detektion vom Objekt aus unterschiedlichen Richtungen.

Ein weitere wesentlicher Aspekt von Implementierungen des Verfahrens der Strukturierten Beleuchtung mit Tiefendiskriminierung ist die Abbildung einer Probe unter Nutzung verschiedener Wellenlängen. Zur Zeit bekannte Implementierungen haben hier Probleme beim Wechsel der Wellenlänge: durch verbleibende axiale chromatische Aberration, welche vom verwendeten Objektiv und der Zwischenoptik abhängig sein kann, muss die projizierte Struktur (in der Regel eine Maske) axial neu positioniert werden. Dies erfordert in bekannten Mikroskopanordnungen relativ große Stellwege und somit viel Zeit für die Bewegung von mechanischen Elementen (siehe z.B. [4]).

Die vorliegende Erfindung schlägt neuartige Anordnungen vor, welche bei einem Wechsel der Abbildungswellenlänge keine mechanische axiale Bewegung der projizierten Maskenstruktur mehr erfordern und somit Geschwindigkeitsvorteile durch schnelle zeitsequentielle oder sogar zeitsimultane Abbildung mit verschiedenen Wellenlängen haben. Weiterhin werden neue Anordnungen zur Lösung des Problems der chromatischen Korrektur vorgeschlagen, welche zwar bewegliche Elemente nutzen, jedoch eine geringere Komplexität im Vergleich zum Stand der Technik haben.

Eine andere Ausgestaltung des Prinzips der strukturierten Beleuchtung entsprechend dem Stand der Technik arbeitet mit kontinuierlich bewegten Beleuchtungsmasken, welche in bzw. auf die Probe projiziert werden [8,9]. Hier wird eine bewegliche Maske sowohl zur Kodierung der Beleuchtungsstruktur und anschließender Projektion auf die Probe als auch zur Dekodierung genutzt. Hierbei ist charakteristisch, dass das von der Probe ausgehende Licht die Maske durchläuft. In [8] wurde eine Anordnung beschrieben, welche für die Implementierung in einem Weitfeld-Mikroskop geeignet ist. Die Anordnung in [9] ist vorrangig für die Verwendung in Kombination mit einem Linienscanner geeignet. Beide Verfahren in [8] und [9] haben gemeinsam, dass zwei verschiedene Signale auf einem ortsauflösenden Detektor integriert werden, wobei sich das gewünschte optische Schnittbild durch einfache Subtraktion der beiden Bilddatensätze ergibt. Gemeinsamer Nachteil der Anordnungen in [8] und [9] ist, dass das von der Probe ausgehende und zu detektierende Licht vor der Registrierung am Detektor beim Durchgang durch die Maske geschwächt wird. Dies ist vor allem bei der Beobachtung schwacher Lichtsignale von Bedeutung, wie sie insbesondere in der Fluoreszenzmikroskopie auftreten.

In der Veröffentlichung [13] wurde gezeigt, wie sich die Methode der Strukturierten Beleuchtung mit der Methode der Fluoreszenzlebensdauer kombinieren lässt. Hier wird die dem Stand der Technik entsprechende Methode aus [2,3] verwendet, welche die Aufnahme einer Sequenz aus drei Beleuchtungsschritten erfordert. Die Messung der Fluoreszenzlebensdauer wird durch Kombination mit einem Detektor sehr hoher Zeitauflösung (gated optical intensifier) und gepulster Laseranregung ermöglicht. Eine andere Variante zur Bestimmung der Fluoreszenzlebensdauer ist das "frequencz domain FLIM" wobei das Anregungslicht periodisch moduliert und die Lebensdauer aus der Phasenverschiebung des Detektionssignals in Bezug auf das Anregungssignal bestimmt wird. Die vorliegende Vorrichtung ermöglicht ebenfalls die Messung der Fluoreszenzlebensdauer in optischen Schnittbildern mit der Aufnahme von nur zwei Einzelbildern pro berechnetem Schnittbild, wenn entsprechende Detektoren und Lichtquellen genutzt werden.

Die Veröffentlichung [14] behandelt eine Methode zur Erzeugung von optischen Schnittbildern mit nur einer Bildaufnahme. Hier wird die in [2,3] vorgestellte Methode mit drei Beleuchtungmustern implementiert. Dabei sind die drei in bzw. auf die Probe projizierten und von der Probe detektierten Phasenschritte durch Licht unterschiedlicher Wellenlänge kodiert, was eine zeitsimultane Projektion bzw. Aufnahme ermöglicht. Diese Technik bietet zwar Geschwindigkeitsvorteile, führt jedoch zu anderen Problemen. Eine Verwendung in der Fluoreszenzmikroskopie ist hier nicht möglich, da die Farbstoffe vorgegebene spektrale Eigenschaften (Anregungswellenlänge und Emissionswellenlänge) haben. Weiterhin ist es problematisch, wenn die Probe im Reflexionsbetrieb inhomogene spektrale Eigenschaften hat. Die Veröffentlichung

[14] ist deshalb als Spezialfall der Methode [2,3] zu sehen, wobei Einschränkungen aufgrund der Wellenlängenkodierung der Beleuchtungsschritte auftreten. Bei dem im folgenden aufgezeigten Verfahren sind diese Einschränkungen nicht erforderlich, da man nicht auf eine spektrale Kodierung der Beleuchtungsschritte angewiesen ist.

Die vorliegende Erfindung bezieht sich auf eine Vorrichtung zur Erzeugung von optischen Schnittbildern mittels strukturierter Beleuchtung und dient der schichtweisen optischen Abtastung ausgedehnter Objekte. Im Vergleich zum Stand der Technik soll es möglich sein, optische Schnittbilder durch Projektion und Aufnahme von nur je zwei Beleuchtungsmustern auf die Probe zu erhalten. Weiterhin soll auf die bisher notwendige, jedoch sehr schwer zu realisierende, pixelgenaue Ausrichtung der beleuchteten Struktur auf den Detektor verzichtet werden.

Mit der zu schaffenden Anordnung soll eine schnellere Probenabtastung, robustere Konstruktion sowie verbessertes Signal-Rauschverhältnis der erzeugten optischen Schnitte bei gleicher Anzahl der detektierten Photonen möglich werden.

Weiterhin ist bzgl. der Anordnung vorzuschlagen, diese ohne bewegliche mechanische Komponenten auszustatten. Dies reduziert den Justieraufwand, Kosten für mechanische Aktuatoren sowie Bildartefakte aufgrund von Positionierfehlern, deutlich.

Ein weiterer Aspekt der vorgeschlagenen Vorrichtung betrifft die Erzeugung von optischen Schnittbildern, wobei die Probe mit verschiedenen Wellenlängen abgetastet wird. Dies kann zum Problem mit den axialen chromatischen Eigenschaften der Optik führen, was bisher z.B. durch eine mechanische Nachführung von optischen Elementen gelöst wurde. Es werden weiterhin Anordnungen offenbart, welche das Problem der axialen chromatischen Korrektur bei der strukturierten Beleuchtung, insbesondere bei Integration in übliche Mikroskopsysteme, ohne bewegte mechanische Elemente lösen und weitere Geschwindigkeitsvorteile gegenüber dem Stand der Technik bieten.

Die Lösung der genannten Aufgaben erfolgt durch die Lehre des Patentanspruches 1.

Das Verfahren zur Generierung optischer Schnittbilder durch Projektion von zwei Lichtverteilungen stellt sich wie folgt dar:

Für die strukturierte Beleuchtung muss das auf das Objekt projizierte Beleuchtungslicht eine Modulation in mindestens einer Raumrichtung aufweisen. Verfahren zur Strukturierten Beleuchtung entsprechend dem Stand der Technik benötigen die Projektion von mindestens drei Strukturen bzw. die Projektion von mindestens drei Phasenlagen einer Struktur.

Es werden genau zwei Strukturen projiziert, wobei es vorteilhaft ist, wenn die Intensitätsverteilung der zweiten Struktur komplementär zur ersten ist und die gemittelten Intensitäten beider Beleuchtungsverteilungen nicht stark voneinander abweichen.

Obwohl auch die Nutzung zweidimensionaler Beleuchtungsstrukturen denkbar ist, soll das Prinzip im Folgenden wegen der einfacheren Darstellung an einer Gitterstruktur erklärt werden. Ohne Einschränkung der Allgemeinheit wird die Projektion einer sinusförmigen Gitterstruktur in die zu untersuchende Probe angenommen.

Die erste Struktur, welche in bzw. auf die Probe abgebildet wird, hat die Form:

$$G_1(a,b) = 1 + A\cos(\omega a + \delta). \qquad <1>$$

Die zweite, zur ersten Struktur komplementäre Struktur ist dann:

$$G_2(a,b) = 1 - A\cos(\omega a + \delta) = 1 + A\cos(\omega a + \pi + \delta). \qquad <2>$$

Hier sind $a$ und $b$ die lateralen lokalen Koordinaten im System der projizierten Struktur, $\omega$ ist Gitterfrequenz und die $\delta$ die Phasenlage des Gitters. Wie aus Gleichung <2> ersichtlich, entspricht die komplementäre Beleuchtungsstruktur einer Verschiebung der periodischen Struktur um den Phasenwinkel $\pi$. Es ist anzumerken, dass die Projektion einer Struktur und ihrer komplementären Struktur erfindungsgemäß ohne bewegliche mechanische Komponenten implementiert werden kann. Dies eliminiert mögliche Phasenfehler durch Positionier-Ungenauigkeiten und wird später erläutert. Weiterhin ist es vorteilhaft, wenn an der Probe die über das Gesichtsfeld gemittelten Intensitäten beider Projektionen nicht zu stark voneinander abweichen.

Die in bzw. auf die Probe projizierten Lichtverteilungen $G_1(a,b)$ und $G_2(a,b)$ werden in der Probe gestreut, reflektiert, von ihr transmittiert, absorbiert oder regen Fluoreszenz oder Lumineszenz an. Beliebige Kombinationen dieser genannten Wechselwirkungen sind ebenfalls denkbar, auch bei verschiedenen Wellenlängen. Durch entsprechende Konfiguration der Detektoren kann zusätzlich die Fluoreszenzlebensdauer bestimmt werden, wobei neben der hohen Zeitauflösung des Detektors eine gepulste Anregung bzw. zeitliche Modulation des Anregungslichtes erforderlich ist.

Die in der Probe erzeugte Projektion der Intensitätsverteilung $G_1(a,b)$ wird vom Ort der Probe auf einen ortsauflösenden Detektor abgebildet. Die Intensitätsverteilungen $G_1(a,b)$ und $G_2(a,b)$ sowie die Objektebene (Probe) und der Detektor befinden sich in zueinander konjugierten Bildebenen. Bei der Implementierung in einem Mikroskop ist es vorteilhaft, wenn sich die projizierte Beleuchtungsstruktur in einer zur Feldblende konjugierten Ebene befindet.

Bei Projektion von $G_1(a,b)$ wird am Detektor die Intensitätsverteilung

$$I_1(x,y) = K(x,y) + S(x,y) * \cos[x * g(x,y) + \alpha(x,y)] \qquad <3>$$

gemessen. Bei der Projektion der zweiten dazu komplementären Struktur $G_1(a,b)$ ergibt sich die komplementäre Intensitätsverteilung

$$I_2(x,y) = K(x,y) - S(x,y) * \cos[x * g(x,y) + \alpha(x,y)] \qquad <4>$$

am Detektor. Hierbei sind $(x,y)$ die Koordinaten in der Detektorebene, $g(x,y)$ ist die Modulationsfrequenz (Gitterfrequenz) in Richtung der x-Koordinate, wobei $g = 2\pi/T$ gilt und T die Periodizität in x-Richtung ist. Übliche ortsauflösende Detektoren wie CCD's oder CMOS Sensoren sind Pixel-basiert, weshalb die Koordinaten $(x,y)$ auch in diskreten Pixelkoordinaten angegeben werden können.

Der Parameter $\alpha(x,y)$ ist die Phase der periodischen Struktur. Die Größe $K(x,y)$ ist die konventionelle Abbildung, welche auch Bildinformationen von Ebenen außerhalb der Fokusebene enthält. In der Mikroskopie entspricht $K(x,y)$ der Weitfeld-Abbildung der Probe.

Mit Hilfe der Gleichungen <3> und <4> kann die konventionelle Abbildung einfach berechnet werden:

$$K(x,y) = \frac{I_1(x,y) + I_2(x,y)}{2}. \qquad <5>$$

Die Größe $S(x,y)$ ist das gesuchte optische Schnittbild, welches auch der Modulationstiefe durch die strukturierte Beleuchtung entspricht). Das Gleichungssystem, bestehend aus <3> und <4>, enthält insgesamt 4 unbekannte Größen für jeden Ort des Detektors mit den Koordinaten $(x,y)$: das konventionelle Schnittbild K(x,y), das gesuchte Schnittbild $S(x,y)$, die Gitterfrequenz $g(x,y)$, sowie die lokale Phase $\alpha(x,y)$.

Bei perfekter Geometrie der in bzw. auf die Probe projizierten Beleuchtungsverteilung und perfekter optischer Abbildung wären die Gitterfrequenz und die Phase nicht von den Koordinaten *(x,y)* abhängig. Unter praktischen Bedingungen und bei leichten Abbildungsfehlern der Optik ist diese Annahme jedoch nur eine Näherung. Deshalb ist die Bestimmung dieser lokalen Parameter vorteilhaft oder notwendig.

Die Verfahren gemäß dem Stand der Technik [2-7] nehmen eine lokal konstante Gitterfrequenz *g* an. Deshalb verbleiben 3 unbekannte Größen und die bisherigen Verfahren [2-7] benötigen mindestens die Messung von 3 Phasenschritten $\alpha$ der projizierten Struktur, um ein Schnittbild zu berechnen. Im erfindungsgemäßen Verfahren wird eine Kalibrierschritt durchgeführt, in welchem die lokale Phase $\alpha(x,y)$ und optional die lokale Gitterfrequenz $g(x,y)$ für jeden Ort im Detektorkoordinatensystem *(x,y)* aus den gemessenen Kalibrierdaten oder den für die Schnittbildberechnung aufgenommenen Bilddaten $I_1(x,y)$ bzw. $I_2(x,z)$ bestimmt werden. In beiden Fällen können die gleichen noch zu erläuternden Methoden (z.B. Fouriertransformation oder Waveletverfahren) zur gebietsweisen Bestimmung der lokalen Phase und der lokalen Gitterfrequenz eingesetzt werden.

Durch den Kalibrierschritt bzw. die Kenntnis der lokalen Phase $\alpha(x,y)$ und der lokalen Gitterfrequenz $g(x,y)$ und die weiter unten beschriebenen Algorithmen kann erfindungsgemäß die Anzahl der erforderlichen Projektionsschritte zur Erzeugung eines optischen Schnittbildes auf nur zwei reduziert werden. Der bei anderen Verfahren nach dem Stand der Technik übliche dritte oder weitere Schritte entfallen damit im Probenerfassungsmodus. Dies führt auch insbesondere bei der Fluoreszenzmikroskopie zu geringeren Probenbelastungen und geringerem Photo-bleaching. Eine Kalibriermessung verwendet vorzugsweise ein ebenes und homogenes Kalibrierobjekt, welches reflektiert und / oder streut und / oder fluoreszierende Eigenschaften und / oder Lumineszens aufweist. Das Einschwenken des Kalibrierobjektes und die Kalibriermessung können automatisiert sein. Das Kalibrierobjekt kann dabei an Stelle der zu untersuchenden Probe oder in einer dazu konjugierten Bildebene lokalisiert sein. Für die Kalibriermessung werden mit Hilfe des Kalibrierobjektes ein Kalibrierdatensatz, bestehend aus $C_1(x,y)$ und optional $C_1(x,y)$ bei der Projektion der Strukturen $G_1(a,b)$ bzw. $G_1(a,b)$ aufgenommen. Bei annähernd homogenen Eigenschaften des Kalibrierobjektes repräsentieren $C_1(x,y)$ bzw. $C_2(x,y)$ somit die Beleuchtungsstruktur und ihre Lage im Detektorkoordinatensystem.

Werden die Bilddatensätze $I_1(x,y)$ bzw. $I_2(x,z)$ zur Bestimmung der lokalen Phasen verwendet, so enthalten diese Datensätze Probeninformationen, denen die Beleuchtungsstruktur aufgeprägt (aufmoduliert) wurde. Da die Probeneigenschaften im Allgemeinen über das Gesichtsfeld und auch zwischen den einzelnen untersuchten Fokusebenen variieren können, variiert die Qualität der Bestimmbarkeit der lokalen Phasen bzw. Gitterfrequenz ebenfalls und kann in Abhängigkeit von der Probe eventuell nur gebietsweise möglich sein. Wird wie meist üblich eine Serie von verschiedenen Fokusebenen abgetastet, so können die Informationen aus mehreren Ebenen für den Kalibrierschritt genutzt werden. So kann zum Beispiel für jedes Detektorgebiet diejenige Fokusebene ausgewählt werden, welche die Bestimmung der lokalen Phasen bzw. Gitterfrequenzen mit der besten Qualität ermöglicht. Ein Beispielkriterium für die Qualität der Bestimmung der lokalen Parameter wird weiter unten angegeben (siehe Metrik in <5c>). Die Kenntnis der lokalen Parameter kann bei Schwierigkeiten bei der Bestimmung in einigen Gebieten durch Interpolation (lateral und / oder axial) bzw. durch periodische Fortsetzung auf das gesamte Detektorkoordinatensystem ausgedehnt werden. Bei diesem Prozess sollten Daten aus Gebieten mit hoher Qualität der Bestimmung der lokalen Parameter entsprechend bevorzugt verwendet werden.

Die gebietsweise Bestimmung der lokalen Phase $\alpha(x,y)$ und der lokale Gitterfrequenz $g(x,y)$ soll nun am Beispiel einer Fouriermethode illustriert werden. Die Nutzung von Wavelet-Techniken oder iterative Verfahren sind ebenfalls denkbar.

Die lokale Gitterfrequenz $g(x,y)$ ist in üblichen Anordnungen eine stetige Funktion mit nur allmählichen Änderungen innerhalb des Gesichtsfeldes. Näherungsweise kann sie ebenfalls durch die Entfernung $E$ in der Abbildung bestimmt werden, welche von einer bekannten Anzahl an Perioden n überdeckt wird, es gilt $g = n2\pi/E$. Zur genaueren Bestimmung definieren wir die Größen

$$FT_C(g,x,y) = \iint\limits_F L(x,y)\cos(g*x)\,dxdy \qquad und \qquad\qquad <5b>$$

$$FT_S(g,x,y) = \iint\limits_F L(x,y)\sin(g*x)\,dxdy.$$

Hier steht $L(x,y)$ für den zu untersuchende Datensatz, welcher ein Datensatz aus der Kalibriermessung $(C_1(x,y)$ bzw. $C_2(x,y)$ oder ein Bilddatensatz $(I_1(x,y)$ bzw. $I_2(x,z))$ sein kann. Das Integrationsgebiet $F$ hat dabei die Koordinaten *(x,y)* als Mittelpunkt überdeckt in guter Näherung eine ganzzahlige Anzahl von Perioden der Struktur. Die Integration kann im Fall von diskreten Koordinaten *(x,y)* durch eine entsprechende Summation ersetzte werden. Nun definieren wir die Metrik

$$M(g,x,y) = \sqrt{FT_C^2(g,x,y) + FT_S^2(g,x,y)} \qquad <5c>$$

Der Wert von $g(x,y)$ ist nun genau der positive Wert, welcher die Metrik $M(g,x,y)$ maximiert. Die Größe des Wertes $M(g,x,y)$ entspricht für den Fall das g die Gitterfrequenz ist, der lokalen Modulationstiefe durch das Gitter. Deshalb ist $M(g,x,y)$ zusätzlich ein nützliches Kriterium für die Qualität bzw. Genauigkeit der Bestimmung der lokalen Parameter. Die lokale Phase $\alpha(x,y)$ kann nun ebenfalls berechnet werden, denn es gilt:

$$\tan[\alpha(x,y)] = \frac{FT_S[g(x,y),x,y]}{FT_C[g(x,y),x,y]}. \qquad <5d>$$

Der Wert von $\alpha(x,y)$ kann nun durch Invertierung der Tangensfunktion unter Berücksichtigung der Vorzeichen von $FT_s$ bzw. $FT_C$ für die Quadrantenzuordnung erhalten werden. Die Funktion *atan2(.,.) der* Programmiersprache C tut dies automatisch.

Die Bestimmung der lokalen Phasen aus den Bilddaten $I_1(x,y)$ bzw. $I_2(x,z)$ kann zwar zu einer etwas geringeren Genauigkeit der lokalen Phasen im Vergleich zu einer Kalibriermessung führen, ermöglicht jedoch den Wegfall der Kalibriermessung und des dazugehörigen apparativen Aufwandes. Die Balance zwischen Genauigkeit und Ortsauflösung der lokalen Parameter kann durch Wahl der Größe des Gebietes F an die jeweiligen Gegebenheiten des Objektes angepasst werden.

Im Folgenden wird angenommen, dass die lokale Phase $\alpha(x,y)$ und die lokale Gitterfrequenz $g(x,y)$ wie beschrieben aus dem Kalibrierschritt ermittelt wurden oder durch a-priori Wissen bekannt sind.

Für die Berechnung des Schnittbildes werden unter Verwendung von <3> und <4> nun folgende Größen eingeführt:

$$D_1(x,y) = \frac{\partial I_1(x,y)}{\partial x} = -g(x,y) * S(x,y) * \sin[x * g(x,y) + \alpha(x,y)] \qquad <6>$$

$$D_2(x,y) = \frac{\partial I_2(x,y)}{\partial x} = +g(x,y) * S(x,y) * \sin[x * g(x,y) + \alpha(x,y)]. \qquad <7>$$

Nun lässt sich das gesuchte Schnittbild mit Hilfe der Gleichungen <3>, <4>, <6> und <7> einfach berechnen:

$$S(x,y) = S(x,y)\sqrt{\cos^2[x * g(x,y) + \alpha(x,y)] + \sin^2[x * g(x,y) + \alpha(x,y)]}$$

$$S(x,y) = \sqrt{\left[\frac{I_1(x,y) - I_2(x,y)}{2}\right]^2 + \left[\frac{D_1(x,y) - D_2(x,y)}{2 * g(x,y)}\right]^2}. \qquad <8>$$

Weiterhin kann es Inhomogenitäten in der Beleuchtungsverteilung der beiden Strukturen am Detektor geben. Diese können sowohl durch die Imperfektionen der projizierten Struktur selbst, Inhomogenitäten bei der Projektion in bzw. auf die Probe oder der anschließenden Abbildung auf den Detektor entstehen. Erfindungsgemäß können deshalb die Daten $I_1(x,y)$ und $I_2(x,y)$ zur Kompensation von Inhomogenitäten normiert werden:

$$N_1(x,y) = \frac{I_1(x,y)}{C_1(x,y)} \quad ; \qquad N_2(x,y) = \frac{I_2(x,y)}{C_2(x,y)}. \qquad\qquad <9>$$

Dabei sind

$$\overline{C_1}(x,y) = \frac{\iint_F I_1(x,y)\,dxdy}{F} \quad ; \quad \overline{C_2}(x,y) = \frac{\iint_F I_2(x,y)\,dxdy}{F} \qquad <10>$$

die Mittelwerte von $C_1(x,y)$ bzw. $C_2(x,y)$ über ein Gebiet $F$, welches die Koordinaten $(x,y)$ beinhaltet und eine ganzzahlige Anzahl von Perioden der Struktur überdeckt.

Die Kompensation von nachteiligen Effekten durch die Inhomogenität der Intensitäten der abgebildeten Beleuchtungsstrukturen (Ausleuchtungsprobleme oder Maskenimperfektion) oder auch Inhomogenitäten des Detektors können durch die Verwendung der normierten Größen $N_1(x,y)$ und $N_2(x,y)$ anstelle der aufgenommenen Größen $I_1(x,y)$ und $I_2(x,y)$ in den Gleichungen <5, 6, 7, 8 > erfolgen.

Die Berechnung von Schnittbildern durch Projektion und Detektion von zwei Beleuchtungsverteilungen je Schnittbild im Probenerfassungsmodus wurde hier am vereinfachten Beispiel der Projektion einer kontinuierlich variierenden, sinusförmigen Beleuchtungsstrukturierung demonstriert. Oft werden jedoch auch binäre Verteilungen genutzt, da derartige Masken einfacher und kostengünstiger herzustellen sind. Zur Reduktion von Bildartefakten im Zusammenhang mit binären oder anderen Masken ist die Kenntnis der lokalen Phasen der Beleuchtungsstruktur ebenfalls wichtig und kann durch den Kalibrierschritt erreicht werden.

Das beschriebene Verfahren kann in einer Vielzahl von Anordnungen verwirklicht werden, insbesondere in weitfeld-Fluoreszenz Mikroskopen und in Weitfeld-Mikroskopen zur Untersuchung und Tiefenerfassung von Oberflächen im Auflichtbetrieb.

Im Folgenden sollen anhand von Zeichnungen erfindungsgemäße Anordnungen zur Implementierung des o. g. Verfahrens erläutert werden.

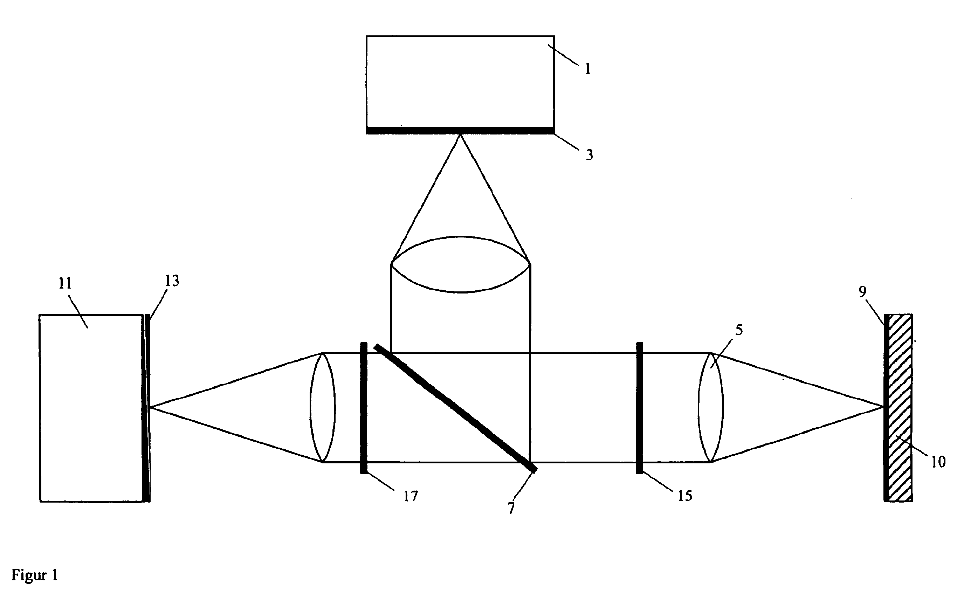

Figur 1 zeigt eine vereinfachte Anordnung zur Implementierung des Verfahrens. Zur vereinfachten Darstellung wurden optional vorhandene Zwischenbilder und relay-Optiken nicht gezeichnet. Die Beleuchtungseinheit (1) generiert erfindungsgemäß zwei verschiedene Lichtverteilungen. Dabei befindet sich in Ebene (3) eine Beleuchtete Maskenstruktur, ein beleuchteter DMD chip (digital mirror device, auch als DLP Technik von Texas Instruments bekannt) oder aber eine Zwischenabbildung einer Lichtverteilung, welche eine Modulation in mindestens einer Raumrichtung aufweist.

Da der Begriff Maske bzw. Maskenstruktur vielfach in diesem Dokument verwendet wird, soll er genauer definiert werden: eine Maske ist ein optisches Element, dessen physikalische Eigenschaften, insbesondere Transmission und / oder Reflexion und / oder Absorption und / oder optische Weglänge über die Fläche des Elementes strukturiert wurden. Wenn die optische Weglänge strukturiert wurde, spricht man von einer Phasenmaske, die zum Beispiel durch das Ätzen von Strukturen in einem Glassubstrat hergestellt werden kann. Eine Phasenmaske kann bei Beleuchtung durch Diffraktion eine bestimmte Beleuchtungsverteilung erzeugen und kann eine hohe optische Effizienz erreichen. Alle hier genannten Maskentypen werden im Folgenden unter dem Begriff Maske zusammengefasst.

Die in der Ebene (3) vorhandene Lichtverteilung wird über den Strahlteiler (7) und das Objektiv (5) auf oder in das zu untersuchende Objekt (10) projiziert. Dabei sind die Ebene (3) und die nominale Objektebene (9) zueinander konjugiert. Der Strahlteiler (7) kann ein halbdurchlässiger Spiegel oder auch ein dichroitischer Strahlteiler sein. Multi-Band Strahlteiler können ebenfalls eingesetzt werden. Die auf bzw. in die Probe projizierte Lichtverteilung wird nun über ein Objektiv und weitere Zwischenoptiken auf die Detektionseinheit (11) abgebildet. Die Ebene (13) ist dabei eine Bildebene oder Zwischenbildebene, welche konjugiert zu den Ebenen (9) und (3) ist. Die Lage der Fokusebene innerhalb des Objektes kann mittels einer Fokussiereinrichtung eingestellt werden, wobei dies gewöhnlich durch eine axiale Bewegung des Objektives (5) oder der Probe realisiert wird. In einem Mikroskopsystem ist es vorteilhaft, wenn die Ebene (3) mit der zu projizierenden Lichtverteilung konjugiert zur Ebene der Leuchtfeldblende ist. Innerhalb der Detektionseinheit (11) kann sich dabei ein Ortsaufgelöster Detektor, wie zum Beispiel ein CCD oder ein CMOS-Sensor befinden. Alternativ dazu kann die Einheit (11) auch das sich in Ebene (13) befindliche Bild weiter auf einen oder mehrere Detektoren abbilden.

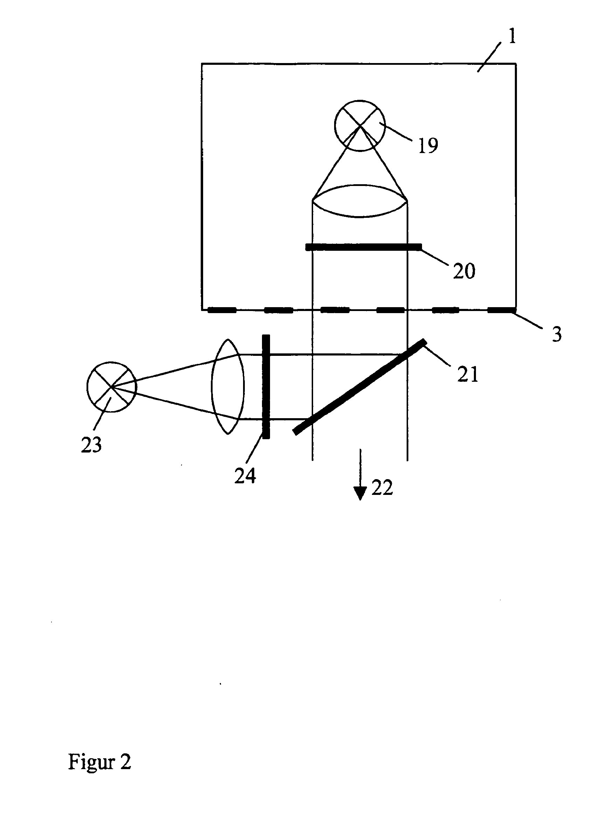

Figur 2 zeigt eine Anordnung zur Realisierung der Beleuchtungseinheit (1). Die beiden Lichtquellen (19) und (23) sind dabei derart angeordnet, dass sie eine Maskenstruktur in Ebene (3) unter Nutzung eine Strahlteilers (21) von verschiedenen Seiten beleuchten. Die Lichtquellen (19) und (23) können dabei in ihrer Intensität und optional auch in der spektralen Zusammensetzung des emittierten Lichtes gesteuert werden. Falls die zeitgleiche Beleuchtung der Maskenstruktur in Ebene (3) von beiden Seiten erfolgt, können die beiden Lichtquellen (19) und (23) auch durch eine einzige Lichtquelle ersetzt werden, welche durch Nutzung eines Strahlteilers und geeignete Strahlführung die Maske von beiden Seiten beleuchtet.

Die Maske in Ebene (3) hat Bereiche, welche besonders stark reflektieren und dazu komplementäre Bereiche mit besonders hoher Transmission. Eine solche Maske kann nicht nur binäre Strukturen sondern auch kontinuierliche Verteilungen enthalten. In Ebene (3) kann sich eine strukturierte Spiegeloberfläche befinden. Dabei werden von beiden Lichtquellen zueinander komplementäre Lichtverteilungen durch Transmission (Lichtquelle (19)) und durch Reflexion (Lichtquelle (23)) an der Maskenstruktur in Ebene (3) erzeugt.

Es ist hervorzuheben, dass eine solche Anordnung zwei verschiedene Beleuchtungsverteilungen zur Verfügung stellt, welche die simultane oder zeitsequentielle Projektion von zwei Strukturen bzw. zwei verschiedenen Phasenlagen derselben Struktur ohne jegliche beweglichen mechanische Elemente ermöglicht. Dies führt zu Geschwindigkeitsvorteilen und auch zu reduziertem Justieraufwand bei der Implementierung des erfindungsgemäßen Verfahrens und ist ein wesentlicher Vorteil gegenüber dem Stand der Technik.

Bei zeitsequentiellem Betrieb emittiert entweder die Lichtquelle (19) oder die Quelle (23) Licht, wobei die Aufnahmen der Abbildung der Probe mittels der Detektionseinheit (11) dazu synchronisiert sind.

In einer weiteren Ausgestaltung der Erfindung werden beide Lichtverteilungen bzw. Beleuchtungsstrukturen zeitgleich abgestrahlt. Zu einer Kodierung der beiden Verteilungen kann dazu die Polarisation des abgestrahlten Lichtes oder seine spektrale Charakteristik genutzt werden. Hierzu werden die beiden optionalen Polarisationsfilter bzw. Spektralfilter (20) und (24) in Figur 2 genutzt. Im Falle von Polarisationsfiltern sind diese gekreuzt zueinander angeordnet, sodass das in Richtung (22) abgestrahlte Licht, welches die Filter (20) bzw. (24) durchlaufen hat, zwei zueinander orthogonale Polarisationsrichtungen aufweist. Alternativ zu linear polarisiertem Licht kann eine Kennzeichnung bzw. Trennung der Projektionskanäle durch links- oder rechtszirkular polarisiertes Licht erfolgen.

Die als Ausführungsbeispiel dargestellte Anordnung zur zeitsimultanen und durch Polarisation oder spektrale Charakteristik kodierten Abstrahlung von zwei komplementären Beleuchtungsstrukturen hat zusätzliche Geschwindigkeitsvorteile und ermöglicht die Erzeugung von Schnittbildern in Echtzeit, wie es insbesondere bei der Materialmikroskopie im Auflichtbetrieb und zur Konstruktion von Oberflächenvermessungssystemen für mikroskopische und makroskopische Objekte wünschenswert ist.

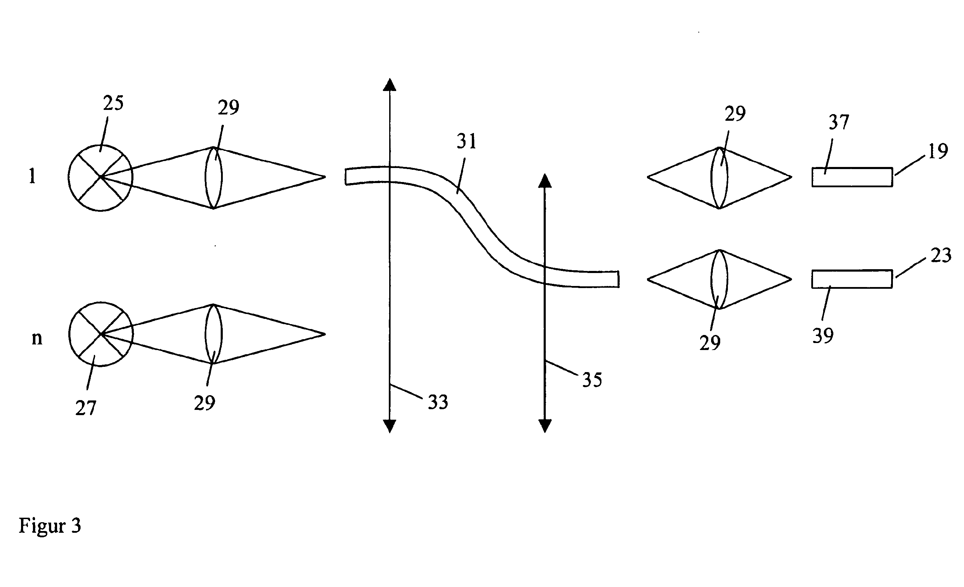

Figur 3 zeigt eine vorteilhafte Anordnung zur Implementierung der Lichtquellen (19) und (23). Hier sind die Lichtquellen (19) und (23), welche Teil der Beleuchtungseinheit (1) sind, durch den Ausgang von zwei Lichtleitern (37) und (39) ersetzt. Der Aufbau enthält weiterhin eine Anzahl von n Lichtquellen, wovon in Figur 3 nur die Lichtquelle 1 (25) und die Lichtquelle n (27) dargestellt sind. Diese Lichtquellen können auch verschiedene spektrale Anteile des von einer einzigen Quelle erzeugten und räumlich spektral aufgespalteten Lichtes darstellen. Die verschiedenen Lichtquellen können unterschiedliche spektrale Eigenschaften haben. Ein Lichtwellenleiter (31) ist mit den Aktuatoren (33) und (35) verbunden und nutzt die Kopplungsoptiken (29). Die gesamte Anordnung arbeitet als erfindungsgemäß als schaltbare Weiche, welche es ermöglicht, eine beliebige Lichtquelle mit einem der beiden Lichtleiterausgänge (19) oder (23) zu verbinden.

Dies hat zwei Hauptvorteile: erstens wird nur ein Exemplar einer Lichtquelle benötigt, was die Kosten senkt und die gleiche spektrale Verteilung in beiden Projektionsschritten sicher stellt. Zweitens können die Ausgänge (19) und (23) als fest justierte Punktlichtquellen fungieren, auf welche die restliche Optik der Projektionseinheit justiert ist und bleibt. Dies reduziert den Justieraufwand.

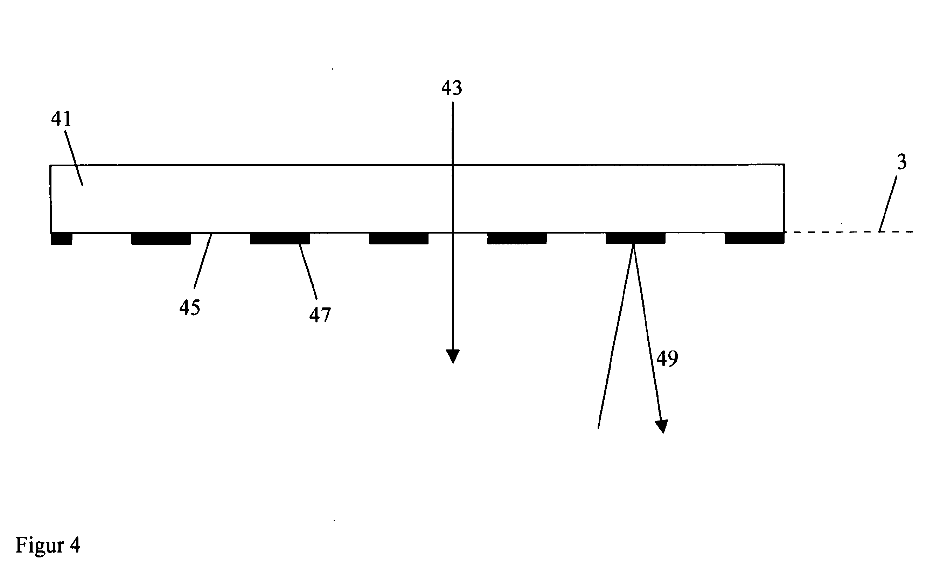

In Figur 4 ist eine mögliche Ausgestaltung der Maske dargestellt, welche Teil der in Figur 2 gezeigten Projektionseinheit sein kann und dort in Ebene (3) angeordnet ist. Im einfachsten Fall befinden sich auf einem transparenten Substrat (41) alternierend angeordnete homogene Gebiete (47) mit hoher Reflektivität (49) und geringer Transparenz sowie homogene Gebiete (45) mit hoher Transparenz (43). Hierbei ist die Gesamtfläche jeweils der transparenten und der intransparenten Flächen gleich groß. Obwohl in diesem Beispiel eine binäre Struktur gewählt wurde, sind auch Maskendesigns mit mehreren Stufen für Transmission und Reflexion oder kontinuierliche Verteilungen denkbar.

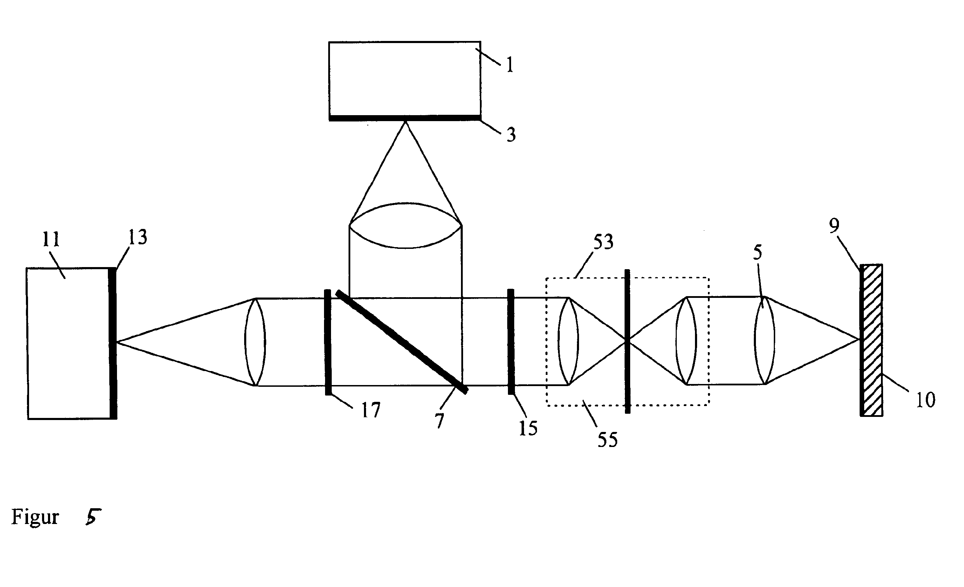

In Figur 5 werden Aspekte zur Kalibriermessung und zur chromatischen Korrektur erläutert. Hier wurde die diagrammatische Darstellung von Figur 1 durch eine zusätzlich dargestellte Zwischenoptik (55) ergänzt. Zur Kalibriermessung kann je nach Erfordernissen ein fluoreszierendes und / oder reflektierendes und /oder streuendes Element (53) in den Strahlengang geschwenkt werden. Die Ebene des Elementes (53) entspricht einer Zwischenbildebene und ist zu (3),(9) und (13) konjugiert. Die Lage und Gestalt des Zwischenbildes und das im Fall einer ebenen Probe von der Probe zurück in die Ebene des Elementes (53) abgebildete Zwischenbild können deckungsgleich sein. Aus diesem Grund kann das Einschwenken von Element (53) äquivalent zur Montage eines Kalibrierobjektes vor dem Objektiv (5) sein. Das Einschwenken des Elementes (53) kann dabei vollautomatisch und im Inneren der optischen Anordnung geschehen. Dies vereinfacht die Benutzung und ermöglicht eine vollautomatische Kalibriermessung, d.h. die Aufnahme von Daten zur späteren Bestimmung der lokalen Phase $\alpha(x,y)$ und optional $(x,y)$ unter Nutzung eines bekannten Kalibrierobjektes. Zusätzlich kann dieses Objekt nicht verschmutzen oder verloren gehen, da es Teil der optischen Anordnung ist. Das Element (53) kann eine diffus reflektierende, fluoreszierende oder eine nur bei einer bestimmten Wellenlänge reflektierende Oberfläche haben. Eine Kalibriermessung kann, unabhängig von Element (53), jederzeit auch durch ein Kalibrierobjekt erfolgen, welches manuell vor dem Objektiv (5) im Probenraum positioniert wird.

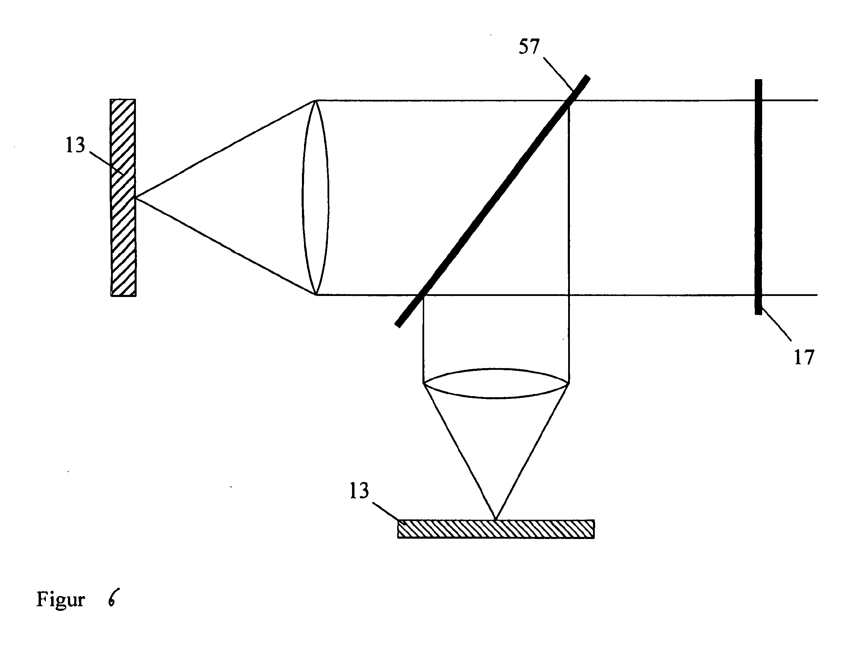

Figur 6 zeigt ein Implementierungsbeispiel für die Detektionseinheit (11). Hier wird das einfallende Licht mittels eines Strahlteilers (57) auf zwei ortsauflösenden Detektoren (z.B. CCD's) verteilt, welche sich in den beiden konjugierten Ebenen (13) befinden. Der Strahlteiler (57) kann zum Beispiel ein dichroitischer Spiegel oder ein Polarisationsstrahlteiler sein. Somit können, je nach verwendetem Strahlteiler, zwei Spektrale Bereiche oder zwei Polarisationszustände der Abbildung zeitgleich und getrennt beobachtet werden.

Wenn die beiden projizierten Lichtverteilungen durch Polarisation oder spektral entsprechend Figur 2 kodiert sind, kann Projektion und Aufnahme der beiden Beleuchtungsstrukturen zeitgleich und in Echtzeit erfolgen. Dies ermöglicht die Konstruktion von schnellen Aufbauten zur Oberflächenvermessung nach dem erfindungsgemäßen Verfahren, welche prinzipbedingt deutlich schneller als bisherige Verfahren sind.

Der Verfahrensablauf kann wie folgt zusammengefasst werden:

In einem ersten Schritt können eine oder mehrere der später auch zur Schnittbildgenerierung verwendeten Beleuchtungsstrukturen auf ein bekanntes Kalibrierobjekt projiziert werden. Aus diesen Daten oder den Bilddaten zur Schnittbildberechnung selbst werden die lokale Phase der projizierten Struktur und optional die lokale Strukturperiode und / oder die Intensitätsverteilung der Projektionsschritte für jeden Ort auf Detektor bestimmt. Die Kalibriermessung kann eingespart werden, wenn die lokale Phase und Gitterfrequenz der projizierten Beleuchtungsstruktur aus den im späteren Prozessverlauf aufgenommenen Bilddaten bestimmt werden kann.

In weiteren Prozessschritten, welche beliebig oft und für verschiedene Wellenlängen und verschiedene axiale Positionen der Probe wiederholt werden können, werden jeweils zwei Projektionsstrukturen auf die Probe projiziert und mit Hilfe der lokalen Phasen und Gitterfrequenz der Beleuchtungsverteilung auf dem Detektor ein optisches Schnittbild berechnet. Die Implementierungen zur strukturierten Beleuchtung entsprechend dem Stand der Technik benötigen mindestens drei Projektionsschritte zur Erzeugung eines Schnittbildes und sind dadurch weniger effizient. Zusätzlich wurden erfindungsgemäße Anordnungen vorgeschlagen, welche die Projektion der beiden Beleuchtungsstrukturen ohne bewegliche mechanische Elemente und in einer Ausführung sogar zeitgleich ermöglichen. Die Selektion der projizierten Lichtverteilung kann durch elektronische Steuerung von Lichtquellen und /oder optischen Schaltern erfolgen. Weitere ausgestaltende Anordnungen ermöglichen den Wechsel der Abbildungswellenlänge ohne Bewegung von mechanischen Elementen.

Eine Kalibriermessung zur Bestimmung der lokalen Phasen und Gitterfrequenzen muss nur bei einer Änderung am optischen System, wie zum Beispiel einem Objektivwechsel und eventuell der erstmaligen Nutzung einer neuen Wellenlänge vorgenommen werden oder kann entfallen, wenn die Bestimmung aus den aufgenommenen Bilddaten in ausreichender Qualität möglich ist und die hierzu erforderliche Rechenzeit toleriert werden kann.

Literaturverweise

[1] Marvin Minsky, "Microscopy Apparatus", US patent 3013467, 1961

[2] M. A. A. Neil, R. Juskaitis, and T. Wilson: "Method of Obtaining Optical Sectioning by using Structured Light in a conventional microscope", Optics Letters, Vol. 22, No. 24, p. 1905, 1997

[3] Wilson et al., "Microscopy Imaging Apparatus and Method", US patent 6376818, 2002

[4] Gerstner et al., "Assembly for Increasing the Depth Discrimination of an Optical Imaging System", US patent 681945 B2, 2004

[5] Gerstner et al., "Assembly for Increasing the Depth Discrimination of an Optical Imaging System", Internationales Patent WO02/12945, 2002

[6] M.A.A. Neil et al., "Real Time 3D Fluorescence Microscopy by Two-Beam Interference Illumination", Optics Communications, 153, 1998

[7] Schaefer, " Structured illumination microscopy: artefact analysis and reduction utilizing a parameter optimization approach", Journal of Microscopy 216 (2), 165-174, 2004

[8] Wilson et al., "Confocal Microscopy Apparatus and Method", US patent 6687052, 2004

[9] Ralf Wolleschensky, "Verfahren und Anordnung zur Tiefenaufgelösten optischen Erfassung einer Probe", Europäisches Patent EP 1420281, 2004

[10] Mark Hopkins, "Multi-Spectral Two-Dimensional Imaging Spectrometer", US patent US5926283

[11] Colin G. Morgan, "Optical Sensor for imaging an object", United States Patent US5381236

[12] Chenggen Quan et al., "Shape measurement by use of liquid-crystal display fringe projection with two-step phase shifting", Applied Optics, Vol, 42, No. 13, 2003, 2329-2335

[13] S.E.D. Webb et al, "A wide field timeßdomain fluorescence lifetime imaging microscope with optical sectioning", Review of Scientific Instruments, Vol. 73, No. 4, 2002, 1898-1907
[14] L.G. Kryewina and M.K. Kim, "Single-exposure optical sectioning by color structured illumination microscopy", Optics Letters, Vol. 31, No. 4, 2006, 477-479

**Patentansprüche**

**1.** Vorrichtung zur Erzeugung von optischen Schnittbildern, bestehend aus einer Beleuchtungseinheit (1), einer optischen Vorrichtung (5) zur Abbildung der Probe auf mindestens einen ortsauflösenden Detektor (11), einer Fokussiereinrichtung sowie einer Signalverarbeitungseinheit zur Durchführung eines Verfahrens zur optischen Abbildung mit Tiefendiskriminierung
**dadurch gekennzeichnet, dass**
die Beleuchtungseinheit durch Beleuchtung einer Maske mit Lichtquellen (19;23) nur je zwei komplementäre Beleuchtungsverteilungen in oder auf der Probe erzeugt, die Beleuchtungsverteilungen eine Periodizität in mindestens einer Raumrichtung besitzen, die Probenebene, in welcher die Beleuchungsverteilung erzeugt wird, zur Ebene des jeweiligen ortsauflösenden Detektors (11) konjugiert ist und die zwei durch das Beleuchtungslicht in oder auf der Probe durch Wechselwirkung mit dem Beleuchtungslicht entstehenden Lichtverteilungen zeitsequentiell oder zeitparallel von dem einen oder mehreren ortsauflösenden Detektoren (11) registriert und der Signalerarbeitungsinheit zur Berechnung und Erzeugung eines optischen Schnittbildes S(x,y) zugeführt werden,
wobei mittels Kalibrierschritt die lokale Phase der periodischen Struktur $\alpha(x,y)$ und die lokale Gitterfrequenz $g(x,y)$ bestimmbar sind und zur Berechnung des Schnittbildes S(x,y) aus den jeweils zwei aufgenommenen Beleuchtungsverteilungen Differenzen zwischen den Beleuchtungsverteilungen und/oder Differenzen zwischen räumlichen Eigenschaften innerhalb der beiden Beleuchtungsverteilungen genutzt werden, wobei die räumlichen Eigenschaften partielle Ableitungen oder Gradienten innerhalb der Beleuchtungsverteilungen sind und das gesuchte Schnittbild S(x,y) aufgrund der Gleichung

$$S(x, y) = S(x, y)\sqrt{\cos^2[x * g(x, y) + \alpha(x, y)] + \sin^2[x * g(x, y) + \alpha(x, y)]}$$

$$S(x, y) = \sqrt{\left[\frac{I_1(x, y) - I_2(x, y)}{2}\right]^2 + \left[\frac{D_1(x, y) - D_2(x, y)}{2 * g(x, y)}\right]^2}.$$

berechnet wird, wobei

$$D_1(x, y) = \frac{\partial I_1(x, y)}{\partial x} = -g(x, y) * S(x, y) * \sin[x * g(x, y) + \alpha(x, y)]$$

und

$$D_2(x, y) = \frac{\partial I_2(x, y)}{\partial x} = +g(x, y) * S(x, y) * \sin[x * g(x, y) + \alpha(x, y)]$$

wobei $I_1(x,y)$ und $I_2(x,y)$ die am Detektor (11) gemessenen komplementären Intensitätsverteilungen sind.

**2.** Vorrichtung zur Erzeugung von optischen Schnittbildern nach Anspruch 1,
**dadurch gekennzeichnet, dass**
die durch das Beleuchtungslicht in oder auf der Probe durch Wechselwirkung mit dem Beleuchtungslicht entstehenden Lichtverteilungen zeitparallel von dem einen oder mehreren ortsauflösenden Detektoren (11) registriert und der Signalverarbeitungseinheit zur Berechnung und Erzeugung eines optischen Schnittbildes zugeführt werden, wobei weiterhin die zwei Beleuchtungsverteilungen zeitgleich projiziert und detektiert werden, wobei sich das für beide Projektionen verwendete Licht in seiner Polarisation und/oder spektralen Zusammensetzung unterscheidet, wobei diese unterschiedlichen Eigenschaften des Beleuchtungslichtes zu verschiedenen Eigenschaften der zeitgleich von der Probe abgegebenen Lichtverteilungen führen und diese Eigenschaften des von der Probe abgegebenen Lichtes zur detektionsseitigen Trennung der beiden Beleuchtungsverteilungen genutzt werden.

3. Vorichtung zur Erzeugung von optischen Schnittbildern nach Anspruch 1 oder 2,
   **dadurch gekennzeichnet, dass**
   zur Kalibrierung der an einem oder mehreren Detektoren (11) registrierten Lichtverteilung ein Kalibrierobjekt (53) vorhanden ist, welches anstelle der Probe eingefügt wird oder in das optische System in einer zur Probe konjugierten Bildebene montiert ist oder in Position gebracht werden kann, wobei das Kalibrierobjekt (53) homogene und/oder bekannte Probeneigenschaften hat und vorzugsweise eben ist.

4. Vorrichtung zur Erzeugung von optischen Schnittbildern nach Anspruch 1 oder 2,
   **dadurch gekennzeichnet, dass**
   der oder die ortsauflösenden Detektoren (11) von der Probe emittiertes Fluoreszenzlicht und/oder in der Probe erzeugtes Lumineszenzlicht detektieren, wobei eine zeitlich modulierte Anregung durch die Beleuchtungseinheit in Kombination mit synchroner oder zeitaufgelöster Detektion erfolgt und die Fluoreszenzlebensdauer und/oder Lumineszenzlebensdauer bestimmt wird.

5. Vorrichtung zur Erzeugung von optischen Schnittbildern nach Anspruch 1 oder 2,
   **dadurch gekennzeichnet, dass**
   die Beleuchtungseinheit (1) zur Erzeugung der Beleuchtungsverteilungen in oder auf der Probe eine Maske in Transmission und/oder Reflexion oder eine Phasenmaske oder ein pixeliertes Element nutzt oder die Beleuchtungsstruktur durch Interferenz ebener Wellen erzeugt wird.

6. Vorrichtung zur Erzeugung von optischen Schnittbildern nach Anspruch 1 oder 2,
   **dadurch gekennzeichnet, dass**
   die Beleuchtungseinheit (1) zwei Beleuchtungsverteilungen erzeugt, welche zueinander um 180 Grad phasenverschoben sind.

7. Vorrichtung zur Erzeugung von optischen Schnittbildern nach Anspruch 1 oder 2,
   **dadurch gekennzeichnet, dass**
   die beiden Beleuchtungsverteilungen in der Beleuchtungseinheit (1) durch vorderseitige oder rückseitige Beleuchtung einer Maskenstruktur erzeugt werden.

8. Vorrichtung zur Erzeugung von optischen Schnittbildern nach Anspruch 1 oder 2,
   **dadurch gekennzeichnet, dass**
   die beiden Beleuchtungsverteilungen in der Beleuchtungseinheit (1) durch elektronisches Schalten von Lichtquellen und/oder das Schalten von Lichtfaserschaltern konfiguriert werden.

9. Vorrichtung zur Erzeugung von optischen Schnittbildern nach Anspruch 1 oder 2,
   **dadurch gekennzeichnet, dass**
   die Anordnung eine Umschaltung der spektralen Zusammensetzung des von der Beleuchtungseinheit emittierten und/oder des von dem mindestens einen ortsauflösenden Detektor (11) registrierten Lichtes ermöglicht.


**Claims**

1. Arrangement for the generation of optical section images, consisting of an illumination unit (1), an optical arrangement (5) for the imaging of the sample onto at least one spatially resolving detector (11), a focusing means as well as a signal processing unit for the implementation of a method for the optical reproduction with depth discrimination,
   **characterized in that**
   the illumination unit creates by illumination of a mask with light sources (19; 23) only two complementary illumination distributions each in or on the sample, the illumination distributions have a periodicity in at least one spatial direction, the sample plane in which the illumination distribution is created is conjugated with respect to the plane of the corresponding spatially resolving detector (11), and the two light distributions created by the illumination light in or on the sample from the interaction with the illumination light are registered time-sequentially or time-simultaneously by the one or more spatially resolving detectors (11) and fed to the signal processing unit for the calculation and generation of an optical section image S(x,y),
wherein by means of a calibration step the local phase of the periodic structure α(x,y) and the local grating frequency g(x,y) can be determined, and for the calculation of the section image S(x,y) from the two recorded illumination distributions differences between the illumination distributions and/or differences between spatial properties within the two intensity distributions are used, wherein the spatial properties are partial derivatives or gradients within the illumination distributions, and the section image S(x,y) to be determined is calculated by means of the equation

$$S(x,y) = S(x,y)\sqrt{\cos^2[x * g(x,y) + \alpha(x,y)] + \sin^2[x * g(x,y) + \alpha(x,y)]}$$

$$S(x,y) = \sqrt{\left[\frac{I_1(x,y) - I_2(x,y)}{2}\right]^2 + \left[\frac{D_1(x,y) - D_2(x,y)}{2 * g(x,y)}\right]^2}.$$

with

$$D_1(x,y) = \frac{\partial I_1(x,y)}{\partial x} = -g(x,y) * S(x,y) * \sin[x * g(x,y) + \alpha(x,y)]$$

and

$$D_2(x,y) = \frac{\partial I_2(x,y)}{\partial x} = +g(x,y) * S(x,y) * \sin[x * g(x,y) + \alpha(x,y)]$$

wherein $I_1(x,y)$ and $I_2(x,y)$ are the complementary intensity distributions measured on the detector (11).

**2.** Arrangement for the generation of optical section images according to claim 1,
**characterized in that**
the light distributions created by the illumination light in or on the sample from the interaction with the illumination light are registered time-simultaneously by the one or more spatially resolving detectors (11) and fed to the signal processing unit for the calculation and generation of an optical section image, wherein further the two illumination distributions are simultaneously projected and detected, wherein the light used for both projections is different with respect to its polarization and/or spectral composition, wherein these different properties of the illumination light lead to different properties of the light distributions simultaneously emitted from the sample and these properties of the light emitted from the sample are used to separate the illumination distributions on the detection side.

**3.** Arrangement for the generation of optical section images according to claim 1 or 2,
**characterized in that**
for the calibration of the light distribution registered on one or more detectors (11) there is a calibration object (53), which is inserted instead of the sample or is mounted in the optical system in an image plane conjugated with the sample or can be brought into position, wherein the calibration object (53) has homogeneous and/or known sample properties and is preferably flat.

**4.** Arrangement for the generation of optical section images according to claim 1 or 2,
**characterized in that**
the one or more spatially resolving detectors (11) detect fluorescence light emitted by the sample and/or luminescence light generated in the sample, wherein a temporal modulation of the excitation by means of the illumination unit is implemented in combination with a synchronous or time-resolved detection, and the fluorescence lifetime and/or luminescence lifetime is determined.

**5.** Arrangement for the generation of optical section images according to claim 1 or 2,

**characterized in that**

the illumination unit (1) for the generation of the illumination distributions in or on the sample uses a mask in transmission and/or reflection or a phase mask or a pixelated element, or the illumination pattern is produced by the interference of plane waves.

6. Arrangement for the generation of optical section images according to claim 1 or 2,
   **characterized in that**
   the illumination unit (1) generates two illumination distributions which are phase-shifted relative to one another by 180 degrees.

7. Arrangement for the generation of optical section images according to claim 1 or 2,
   **characterized in that**
   the two illumination distributions are generated within the illumination unit (1) by means of front illumination or back illumination of a mask structure.

8. Arrangement for the generation of optical section images according to claim 1 or 2,
   **characterized in that**
   the two illumination distributions are configured within the illumination unit (1) by means of electronic switching of light sources and/or the switching of optical fiber switches.

9. Arrangement for the generation of optical section images according to claim 1 or 2,
   **characterized in that**
   the arrangement allows a switching of the spectral composition of the light emitted by the illumination unit and/or the light registered by the at least one spatially resolving detector (11).

**Revendications**

1. Dispositif pour engendrer des images optiques en coupe, composé d'une unité d'éclairage (1), d'un dispositif optique (5) pour produire une image d'un échantillon sur au moins un détecteur à résolution locale (11), d'un système de focalisation, ainsi que d'une unité de traitement de signaux pour mettre en oeuvre un procédé pour produire une image optique avec discrimination en profondeur,
   **caractérisé en ce que**
   l'unité d'éclairage engendre, par éclairage d'un masque avec des sources lumineuses (19 ; 23) uniquement deux répartitions d'éclairage complémentaires respectives dans ou sur l'échantillon, les répartitions d'éclairage possèdent une périodicité dans au moins une direction dans l'espace, le plan d'échantillon dans lequel est engendrée la répartition d'éclairage est conjugué avec le plan du détecteur à résolution locale (11) respectif, et les deux répartitions de lumière qui apparaissent sous la lumière d'éclairage dans ou sur l'échantillon par interaction avec la lumière d'éclairage sont enregistrées de manière séquentielle dans le temps ou de manière parallèle dans le temps par un ou par plusieurs détecteurs (11) à résolution locale, et sont amenées à l'unité de traitement de signaux pour le calcul et la production d'une image optique en coupe S(x,y),
   dans lequel au moyen d'une étape de calibrage, il est possible de déterminer la phase locale de la structure périodique σ(x,y) et la fréquence de grille locale g(x,y), et
   pour le calcul de l'image en coupe S(x,y) on utilise à partir des deux répartitions d'éclairage respectivement enregistrées des différences entre les répartitions d'éclairage et/ou des différences entre des propriétés spatiales à l'intérieur des deux répartitions d'éclairage, les propriétés spatiales sont des dérivées partielles ou des gradients à l'intérieur des répartitions d'éclairage, et l'image en coupe recherchée S(x,y) est calculée en se basant sur l'équation :

$$S(x,y) = S(x,y)\sqrt{\cos^2[x * g(x,y) + \alpha(x,y)] + \sin^2[x * g(x,y) + \alpha(x,y)]}$$

$$S(x,y) = \sqrt{\left[\frac{I_1(x,y) - I_2(x,y)}{2}\right]^2 + \left[\frac{D_1(x,y) - D_2(x,y)}{2 * g(x,y)}\right]^2}.$$

dans laquelle

$$D_1(x,y) = \frac{\partial I_1(x,y)}{\partial x} = -g(x,y) * S(x,y) * \sin[x * g(x,y) + \alpha(x,y)]$$

et

$$D_2(x,y) = \frac{\partial I_2(x,y)}{\partial x} = +g(x,y) * S(x,y) * \sin[x * g(x,y) + \alpha(x,y)]$$

dans laquelle $I_1(x,y)$ et $I_2(x,y)$ sont les répartitions d'intensité complémentaires mesurées au niveau du détecteur (11).

2. Dispositif pour engendrer des images optiques en coupe selon la revendication 1, **caractérisé en ce que** les répartitions de lumière qui apparaissent au moyen de la lumière d'éclairage dans ou sur l'échantillon par interaction avec la lumière d'éclairage sont enregistrées de manière parallèle dans le temps par lesdits un ou plusieurs détecteurs à résolution locale (11) et sont amenées à l'unité de traitement de signaux pour le calcul et la production d'une image optique en coupe, dans lequel les deux répartitions de lumière sont en outre projetées et détectées de manière simultanée dans le temps, dans lequel la lumière utilisée pour les deux projections se distingue quant à sa polarisation et/ou sa composition spectrale, et ces propriétés différentes de la lumière d'éclairage mènent à des propriétés différentes des répartitions de lumière délivrées de manière simultanée par l'échantillon, et ces propriétés de la lumière fournie par l'échantillon sont utilisées pour la séparation, du côté détection, des deux répartitions d'éclairage.

3. Dispositif pour engendrer des images optiques en coupe selon la revendication 1 ou 2, **caractérisé en ce que**, pour le calibrage de la répartition de lumière enregistrée au niveau d'un ou de plusieurs détecteurs (11) il est prévu un objet de calibrage (53) qui est introduit à la place de l'échantillon ou qui est monté dans le système optique dans un plan image conjugué par rapport à l'échantillon, ou peut être amené dans une position, et l'objet de calibrage (53) a des propriétés d'échantillons homogènes et/ou connues et est de préférence plan.

4. Dispositif pour engendrer des images optiques en coupe selon la revendication 1 ou 2, **caractérisé en ce que** le ou les détecteurs (11) à résolution locale détectent une lumière fluorescente émise par l'échantillon et/ou une lumière luminescente engendrée dans l'échantillon, et il se produit une excitation modulée dans le temps par l'unité d'éclairage en combinaison avec une détection synchrone ou à résolution temporelle, et la durée de fluorescence et/ou la durée de luminescence est déterminée.

5. Dispositif pour engendrer des images optiques en coupe selon la revendication 1 ou 2, **caractérisé en ce que** l'unité d'éclairage (1) utilise, pour engendrer les répartitions d'éclairage dans ou sur l'échantillon, un masque en transmission et/ou en réflexion, ou encore un masque de phase ou un élément pixelisé, ou la structure d'éclairage est engendrée par interférence d'ondes planes.

6. Dispositif pour engendrer des images optiques en coupe selon la revendication 1 ou 2, **caractérisé en ce que** l'unité d'éclairage (1) engendre deux répartitions d'éclairage qui sont décalées en phase de 180° l'une par rapport à l'autre.

7. Dispositif pour engendrer des images optiques en coupe selon la revendication 1 ou 2, **caractérisé en ce que** les deux répartitions d'éclairage sont engendrées dans l'unité d'éclairage (1) par éclairage d'une structure en masque du côté avant ou du côté arrière.

8. Dispositif pour engendrer des images optiques en coupe selon la revendication 1 ou 2, **caractérisé en ce que** les deux répartitions d'éclairage dans l'unité d'éclairage (1) sont configurées par commutation électronique de sources de lumière et/ou par commutation de commutateurs à fibres optiques.

9. Dispositif pour engendrer des images optiques en coupe selon la revendication 1 ou 2,
   **caractérisé en ce que** l'agencement permet une inversion de la composition spectrale de la lumière émise par l'unité d'éclairage et/ou de la lumière enregistrée par ledit au moins un détecteur à résolution locale (11).

Figur 1

Figur 2

Figur 3

EP 2 137 488 B1

Figur 4

EP 2 137 488 B1

Figur 5

Figur 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7115848 B1
- US 5381236 A
- US 3013467 A
- US 6376818 B
- US 681945 B2
- WO 0212945 A
- US 6687052 B
- EP 1420281 A
- US 5926283 A

**In der Beschreibung aufgeführte Nicht-Patentliteratur**

- Single-Exposure optical sectioning by color structured illumination microscopy. **KRZEWINA L.G. et al.** Optics Letters. Optical Society of America, 15. Februar 2006, vol. 31, 477-479
- **M. A. A. NEIL ; R. JUSKAITIS ; T. WILSON.** Method of Obtaining Optical Sectioning by using Structured Light in a conventional microscope. *Optics Letters,* 1997, vol. 22 (24), 1905
- **M.A.A. NEIL et al.** Real Time 3D Fluorescence Microscopy by Two-Beam Interference Illumination. *Optics Communications,* 1998, 153
- **SCHAEFER.** Structured illumination microscopy: artefact analysis and reduction utilizing a parameter optimization approach. *Journal of Microscopy,* 2004, vol. 216 (2), 165-174
- **CHENGGEN QUAN et al.** Shape measurement by use of liquid-crystal display fringe projection with two-step phase shifting. *Applied Optics,* 2003, vol. 42 (13), 2329-2335
- **S.E.D. WEBB et al.** A wide field timeßdomain fluorescence lifetime imaging microscope with optical sectioning. *Review of Scientific Instruments,* 2002, vol. 73 (4), 1898-1907
- **L.G. KRYEWINA ; M.K. KIM.** Single-exposure optical sectioning by color structured illumination microscopy. *Optics Letters,* 2006, vol. 31 (4), 477-479